# EUROPÄISCHE PATENTANMELDUNG

(11) **EP 1 835 196 A2**
(43) Veröffentlichungstag der Anmeldung: **19.09.2007**
(21) Anmeldenummer: 07005556.1
(22) Anmeldetag: 19.03.2007
(51) Int. Cl.: F16D 51/16

(54) **Verschleissring für Trommelbremsen**

(30) Priorität: 18.03.2006 DE 102006012542
(71) Anmelder: Hermann Peters GmbH & Co., 58256 Ennepetal (DE)
(72) Erfinder: Mois, Peter, 58256 Ennepetal (DE); Richter, Frank, 58313 Herdecke (DE); Weise, Bernd, 45527 Hattingen (DE)
(74) Vertreter: Schweiger, Johannes

(57) **Zusammenfassung**

Die Erfindung betrifft einen Verschleißring (1) für Tommelbremsen zur Anordnung zwischen einem Lager (21) einer Bremsbacke (20) und einem Lagerbolzen (40) eines Achskörpers, mit einer Innenseite (4) und einer Außenseite (5), wobei ein Ringabschnitt (6) des Verschleißrings auf dem Lagerbolzen, vorzugsweise auf eine im Lagerbolzen vorgesehene Umfangsnut (41), aufspannbar ist, wobei zur Verbindung von Lagerbolzen und Bremsbacke an dem Verschleißring ein Greifarm (2) mit einem Greifabschnitt (3) vorgesehen ist und der Verschleißring über den Greifabschnitt an der Bremsbacke lösbar, aber formschlüssig anbringbar ist, damit die Halteeigenschaften des Verschleißrings verbessert werden.

## Beschreibung

Die Erfindung betrifft einen Verschleißring für Tommelbremsen zur Anordnung zwischen einem Lager einer Bremsbacke und einem Lagerbolzen eines Achskörpers, mit einer Innenseite und einer Außenseite, wobei ein Ringabschnitt des Verschleißrings auf dem Lagerbolzen, vorzugsweise auf eine im Lagerbolzen vorgesehene Umfangsnut, aufspannbar ist.

Aus der DE 44 07 399 C1 ist eine Trommelbremse mit einer zwischen Lagerzapfen und Lageröffnung angeordneten Lagerhülse bekannt, die auf Grund ihrer elliptischen Form und der sich daraus ergebenden Vorspannung der Lagerhülse den Lagerzapfen in der Lageröffnung klemmend hält.

Die Trommelbremse befindet sich im ungefederten Bereich des Fahrzeugs und ist daher Erschütterungen auf Grund unebener Fahrbahnoberfläche unmittelbar ausgesetzt. Insbesondere die in der Trommelbremse unten liegende Bremsbacke, die zum Teil ein erhebliches Gewicht von bis zu mehreren Kilogramm erreichen kann, ist bei Fahrbahnunebenheiten einer beträchtlichen Beschleunigung ausgesetzt.

Aufgabe der vorliegenden Erfindung ist es daher, einen Verschleißring mit verbesserten Halteeigenschaften vorzusehen.

Grundidee der vorliegenden Erfindung ist es dabei, den gattungsgemäßen Verschleißring weiterzubilden, indem dieser form- und/oder kraftschlüssig mit der Bremsbacke verbunden ist, und zwar vorzugsweise über einen Form-/Kraftschluss, der entgegen der Lageröffnung der Bremsbacke gerichtet ist.

Durch diese Maßnahme wird ein Lösen, insbesondere der unten liegenden Bremsbacke von dem Lagerzapfen/Lagerbolzen effektiv verhindert und es kann sogar auf zusätzliche, zwischen den gegenüberliegenden Bremsbacken angeordnete Federmittel verzichtet werden. Dies führt ergänzend zu einer Reduzierung des Gewichts im ungefederten Bereich des Fahrzeuges.

In einer allgemeinen Ausführungsform der Erfindung weist der gattungsgemäße Verschleißring die Merkmale des kennzeichnenden Teils des Patentanspruchs 1 auf, die zur Lösung der oben genannten Aufgabe führen.

Ein Verschleißring mit Greifarm kann beim Austauschen von Ersatzteilen leicht demontiert und wieder montiert werden, da der am Verschleißring vorgesehene Greifarm beim Aufsetzen des Lagers/der Lageröffnung auf den Verschleißring an einer entsprechend vorgesehenen Stelle der Bremsbacke einraster und/oder diese hintergreifend ausgebildet ist.

Unter Greifarm im Sinne der Erfindung wird jeder Arm verstanden, der eine Wirkverbindung zwischen Bremsbacke und Verschleißring herstellen kann, wobei auch zusätzliche Hilfsmittel oder Befestigungsmittel zwischen Greifarm und Bremsbacke vorgesehen sein können. So ist auch eine Ausgestaltung des Greifarmes denkbar, in welcher der Greifarm über eine in dem Greifarm ausgebildete Durchgangsöffnung mittels einer Schraube oder anderer Verbindungsmittel mit einem Gegenstück an der Bremsbacke verbunden wird. Der Greifarm kann beispielsweise auch in einem Langloch geführt werden, das eine Drehbewegung der Bremsbacke relativ zu dem Lagerbolzen ermöglicht.

In einer vorteilhaften Ausführungsform der Erfindung ist vorgesehen, dass die Innenseite zumindest im Bereich der Kontaktfläche von Innenseite und Lagerbolzen formkonaplementär zu dem Lagerbolzen ausgebildet ist. Weiterhin kann die Außenseite zumindest im Bereich der Kontaktfläche von Außenseite und Lager form komplementär zu dem Lager ausgebildet sein. Durch die formkomplamentäre Ausgestaltung wird eine optimale Lagerung des Verschleißrings in dem Lager sowie des Lagerbolzens in dem Verschleißring gewährleistet.

Mit Vorteil ist der Greifabschnitt die Bremsbacke an der dem Lager gegenüberliegenden Seite der Bremsbacke in einem Haltebereich hintergreifend ausgebildet.

Besonders vorteilhaft ist es, den Greifarm einstückig an dem Verschleißring anzuformen, da hierdurch der Herstellungsaufwand, insbesondere bei Ausgestaltung als Stanz-Biege-Bauteil, stark reduziert wird.

Formkomplementär zu der Bremsbacke ausgestaltet lässt sich dcr Greifarm, vorzugsweise als 1,-förmiger Greifarm besonders einfach auf die Bremsbacke/den Brembackensteg der Bremsbacke aufsetzen und - beispielsweise mittels eines Schraubenziehers - wieder lösen.

Um Ermüdungserscheinungen des Verschleißrings zu vermeiden, sind mit Vorteil Ausgleichsmittel zum Ausgleich einer Relativbewegung zwischen Lagerbolzen und Bremsbacke am Verschleißring vorgesehen. Die beim Betätigen der Trommelbremse erfolgende, geringfügige Rotationsbewegung der Bremsbacke um den Lagerbolzen als Rotationsmittelpunkt wird durch die Ausgleichsmittel erleichtert, was zu einer Verringerung der für die Rotation aufzubringenden Kraft und damit einer Verringerung der Bremsbetätigungskraft führt. Im Stand der Technik wirkt auf Grund der in der Lageröffnung der Bremsbacke wirkenden (Klemm-) Kräfte eine der Rotationsbewegung zwischen Bremsbacke und Lagerbolzen entgegen gerichtete Reibungskraft, die bei jedem Bremsvorgang überwunden werden muss.

Die Ausgleichsmittel können beispielsweise als Gelenk, vorzugsweise als Nietgelenk, in den Greifarm, vorzugsweise außerhalb des Greifabschnitts, vorgesehen sein.

Alternativ dazu können die Ausgleichsmittel durch zu einer Relativbewegung des Greifabschnitts kongruente Ausgestaltung des Haltebereichs vorgesehen sein. Weiterhin können die Ausgleichsmittel als Gleitbeschichtung, vorzugsweise einer Kunststoffgleitbeschichtung, an der Innenseite des Verschleißrings vorgesehen sein.

Besonders einfach kann der Verschleißring aus einem T-förmigen Stanz-Biege-Material gebildet sein, wobei der obere Abschnitt der T-Form den Ringabschnitt und der untere Abschnitt der T-Furm den Greifarm bildet und der Ringabschnitt gegenüber dem Greifarm angewinkelt ist, vorzugsweise um einen Winkel von 90°.

Bei einem solchen angewinkelten Greifarm ist es auf Grund der oben beschriebenen, durch Fahrbahnunebenheiten auftretenden Kräfte vorteilhaft in einem Übergangsbereich zwischen Greifarm und Ringabschnitt Rundungen auszubilden, damit eine Rissbildung in diesem Bereich verhindert werden kann.

Die Erfindung betrifft weiterhin eine Trommelbremse mit den Merkmalen nach Ansprüchen 15 oder 16.

Weitere vorteilhafte Ausgestaltungen sind den Ansprüchen sowie der nachfolgenden Figutenbeichreibung zu entnehmen, wobei die Figuren der Zeichnung folgendes darstellen:
- Fig. 1:: eine Seitenansicht eines in eine Bremsbacke eingesetzten erfindungsgemäßen Verschleißringes;
- Fig. 2:: eine geschnittene Teilansicht eines zwischen Lagerbolzen und Bremsbacke angeordneten erfindungsgemäßen Verschleißrings in einer ersten Ausführungsform;
- Fig. 3:: eine geschnittene Teilansicht eines zwischen Lagerbolzen und Bremsbacke angeordneten erfindungsgemäßen Verschleißrings in einer zweiten Ausführungsform;
- Fig. 4:: eine perspektivische Ansicht eines erfindungsgemäßen Verschleißrings in der in Fig. 2 gezeigten Ausführungsform;
- Fig. 5:: eine Seitenansicht eines zwischen Lagerbolzen und Lager montierten Verschleißrings in einer weiteren Ausführungsform und
- Fig. 6:: eine Seitenansicht eines zwischen Lagerbolzen und Lager montierten Verschleißrings in einer weiteren Ausführungsform und
- Fig. 7:: eine Aufsicht auf einen gestanzten, noch nicht gebogenen erfindungsgemäßen Verschleißring und
- Fig. 8:: eine perspektivische Ansicht eines zwischen Lagerbolzen und Lager montierten Verschleißrings in einer weiteren Ausführungsform.

In den Figuren sind gleiche oder gleich wirkende Bauteile mit identischen Bezugszeichen gekennzeichnet.

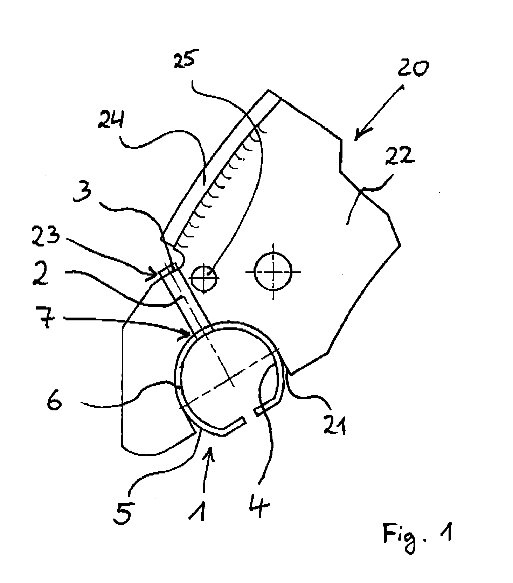

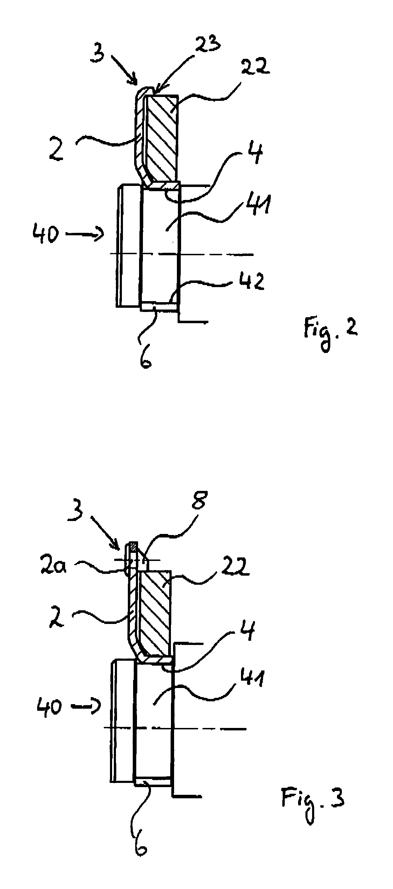

In Fig. 1 ist eine vom Grundaufbau bekannte Bremsbacke 20 teilweise dargestellt, die aus einer Bremsbelagträgerplatte 24 und üblicherweise zwei daran mit Abstand zueinander senkrecht angeschweißten Bremsbackenstegen 22 gebildet ist. Während an dem gezeigten Ende der Bremsbacke 20 ein Lager 21 zur Aufnahme eines am (nicht gezeigten) Achskörper eines Fahrzeugs angebrachten Lagerbolzens 40 (siehe Fig. 2) vorgesehen ist, befindet sich am anderen Ende der Bremsbacke 20 eine auf einem Bremsrollenbolzen drehbar gelagerte Bremsrolle. Die Bremsrolle wird mittels eines nicht gezeigten Bremsnockens betätigt, wodurch eine Rotation der Bremsbacke 20 um den Lagerbolzen 40 und damit eine Kontaktierung eines auf der Bremsbelagträgerplatte 24 angebrachten Bremsbelages mit der Bremstrommelinnenseite bewirkt wird.

In dem Lager 21, das als halbschalenförmige Lageröffnung ausgebildet ist, befindet sich ein Verschleißring 1, der auf einen (in Fig. 1 nicht gezeigten) Lagerbolzen 40 aufgesetzt/aufgespannt ist. Der Verschleißring 1 besteht aus einem Ringabschnitt 6, der den Lagerbolzen 40 umschließt und einem an dem Ringabschnitt 6 angeformten Greifarm 2, der mit seinem dem Ringabschnitt 6 abgewandten Ende einen Greifabschnitt 3 bildet, der den Bremsbackensteg 22 in einem Halteabschnitt 23 hintergreift. Der Verschleißring 1 wird dadurch in dem Lager 21 gehalten, wobei eine Außenseite 5 des Ringabschnitts 6 mit möglichst kleinem Spiel im Lager 21 liegt.

Eine Innenseite 4 des Verschleißrings 1/des Ringabschnitts 6 liegt möglichst vollflächig an einer am Umfang des Lagerbolzen 40 vorgesehenen Umfangsnut 41 an, so dass eine Axialverschiebung des Verschleißrings 1 auf dem Lagerbolzen 40 verhindert wird (siehe Fig. 2 und 3).

Die in Fig. 2 und 3 gezeigten Ausführungsformen unterscheiden sich in dem Greifabschnitt 3 des Greifarms 2, der bei der in Fig. 2 gezeigten Ausführungsform einstückig L-förmig angewinkelt ist und den Bremsbackensteg 22 im Haltebereich 23 hintergreift. Damit ist bei einer in Richtung Bremstrommel an der Bremsbacke 20 wirkenden Kraft (Zugbelastung/Erschütterung) gewährleistet, dass die Bremsbacke durch den Verschleißring 1 auf dem Lagerbolzen 40 gehalten wird.

In der in Fig. 3 gezeigten Ausführungsform ist der Greifabschnitt 3 mit einem eigenständigen Bauteil an dem dem Ringabschnitt 6 abgewandten Ende des Greifarms 2 versehen. Am Greifarm 2 ist eine Durchgangsöffnung 2a vorgesehen, in der ein Haltemittel 8, beispielsweise ein Niet oder eine, vorzugsweise lösbare, Schraube befestigt ist. Diese erfüllt die gleiche Aufgabe wie die L-förmige Ausführungsform gemäß Fig. 2.

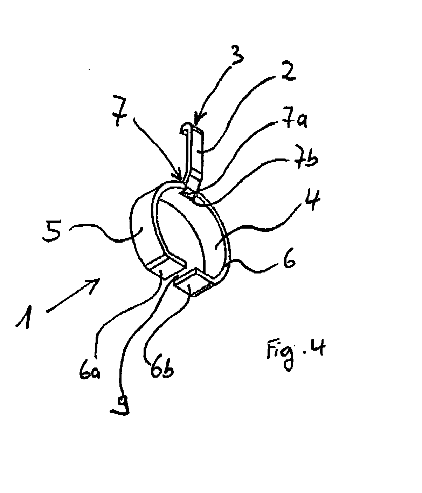

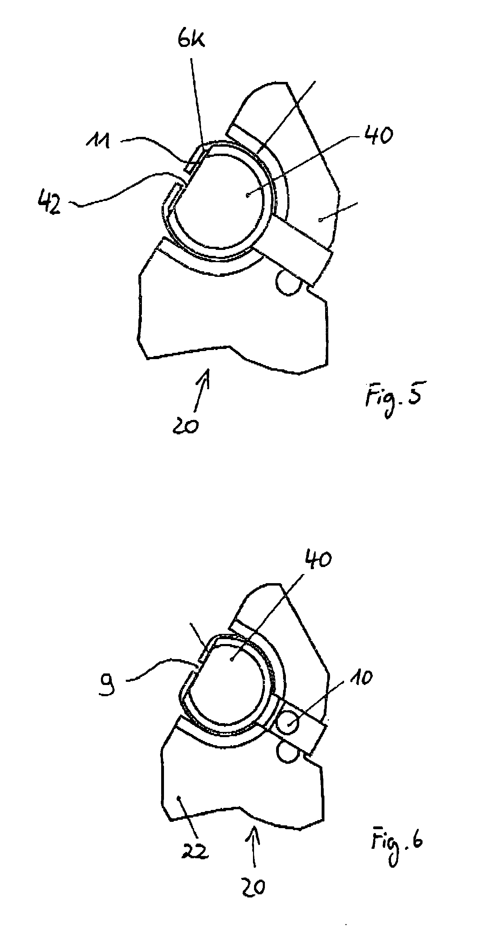

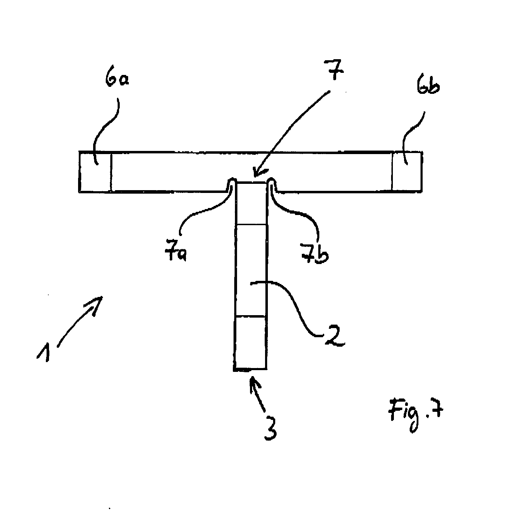

In Fig. 4 ist der Verschleißring 1 zum besseren Verständnis des Aufbaus in perspektivischer Ansicht dargestellt. Der Verschleißring 1 ist aus einem T-förmigen, in Fig. 7 dargestellten Stanz-Biege-Material gebildet, wobei der obere Abschnitt der T-Form den in Fig. 4 gezeigten Ringabschnitt 6 mit zwei endseitig zueinander gerichteten Schultern 6a, 6b bildet, wobei die Schultern formkomplementär zu einer in Fig. 5 gezeigten Flachseite 42 des Lagerbolzens 40 ausgebildet sind. Indem der Ringabschnitt 6 zwischen den Schultern 6a und 6b geöffnet ist, kann der Verschleißring 1 mit einfachen Mitteln auf die Umfangsnut 41 des Lagerbolzens 40 aufgespannt werden.

An der dem Schlitz 9 zwischen Schultern 6a und 6b gegenüberilegenden Seite des Ringabschnitts 6 ist ein Übergangsbereich 7 zwischen Greifarm 2 und Ringabschnitt 6 vorgesehen, der auf Grund der in diesem Bereich verstärkt auftretenden Belastungen bei Erschütterungen der Trommelbremse besonders stabil ausgebildet sein sollte. Mit Vorteil ist der Übergangsbereich 7 abgerundet ausgebildet, wie auch in Fig. 2 zu erkennen. Der Greifarm 2 ist gegenüber dem Ringabschnitt 6 in etwa um 90°, vorzugsweise stufenartig, angewinkelt und zur Vermeidung von Beschädigungen, insbesondere Rissbildung sind zwei Seiten 7a, 7b des Übergangsbereichs 7 als, insbesondere tropfenförmige oder sacklochartige, Ausnehmung oder Hinterschnitte ausgebildet (siehe auch Fig. 7), um dort auftretende Spannungskräfte optimal zu verteilen.

Um eine - wenn auch geringfügige - Rotation der Bremsbacke 20 um den Lagerbolzen 40 zuzulassen, ist der Verschleißring 1 in der Ausführungsform gemäß Fig. 5 im Bereich der Schultern 6a und 6b so ausgestaltet, dass ein Spalt 11/Spiel 11 zwischen der Flachseite 42 des Lagerbolzens 40 und den Schultern 6a, 6b verbleibt, der eine durch Rotation der Bremsbacke 20 bewirkte Drehbewegung des Verschleißringes 1 relativ zum Lagerbolzen 40 zulässt, bis ein Ende der Flachseite 42 auf die zwischen Schultern 6a, 6b und Ringabschnitt 6 gebildete Knickstelle 6k trifft. Eine auf der Innenseite 4 des Verschleißrings 1 aufgebrachte Kunsistoffbeschichtung 12 sorgt für eine nahezu reibungslose Drehbewegung zwischen Verschleißring 1 und Umfangsnut 41. Auf Grund des Verhältnisses von Abstand Bremsbacke 20 zu den nicht gezeigten Bremsrollenbolzen und Radius des Ringabschnitts 6 und des geringen Abstands zwischen Bremsbelag und Bremstrommel ist nur eine geringfügige relative Verschiebung zwischen Lagerbolzen 40 und Lager 21 notwendig, wobei die Abtragung des Bremsbelages zu berücksichtigen ist.

Im Gegensatz dazu liegen die Schultern 6a, 6b in der in Fig. 6 gezeigten Ausführungsform formschlüssig an der Flachseite 42 des Lagerbolzens 40 an. Die geringfügige Relativbewegung zwischen Lagerbolzen und Bremsbacke beim Bremsen gleicht ein im Greifarm 2 vorgesehenes Nietgelenk 10 aus. Das Nietgelenk 10 ist vorzugsweise möglichst nahe am Übergangsbereich 7 angeordnet.

Alternativ zu den gezeigten Ausführungsformen kann der Greifarm 2 auch in eine Ausnehmung 25 des Bremsbackensteges 22 eingreifen oder als Rastverbindung an einer gesonderten Rastnase an der Bremsbacke 20 vorgesehen sein. Die Ausnehmung 25 kann alternativ als Langloch ausgestaltet sein, in welche der Greifarm 2 oder ein den Greifarm 2 und die Ausnehmung verbindendes Haltemittel (nicht gezeigt), beispielsweise ein Splint oder eine Schraube, eingreift. Durch eine zu der oben beschriebenen Rclativrotationsbewegung von Bremsbacke 20 und Lagerbolzen 40 korrespondierende Ausgestaltung des Langlochs wird eine Bewegung des Verschleißrings 1/Greifarms 2 innerhalb des Langloches ermöglicht, während eine Bewegung der Bremsbacke 20 von dem Lagerbolzen 40 weg wirksam verhindert wird.

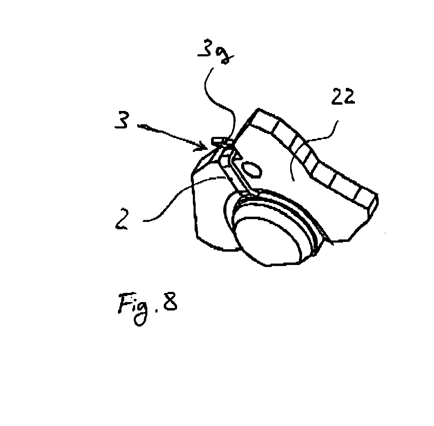

Fig. 8 zeigt eine weitere mögliche Gestaltung des Greifarms 2, bei der am Greifabschnitt 3 ein abgewinkelter Griffbereich 3g vorgesehen ist, um die Montage des Verschleißringes zu erleichtern.

### Bezugszeichenliste

- 1: Verschleißring
- 2: Greifarm
- 2a: Durchgangsöffnung
- 3: Greifabschnitt
- 3g: Griffbereich
- 4: Innenseite
- 5: Außenseite
- 6: Ringabschnitt
- 6a: Schenkel
- 6b: Schenkel
- 6k: Knickstelle
- 7: Übergangsbereich
- 7a: Seite
- 7b: Seite
- 8: Haltemittel
- 9: Schlitz
- 10: Nietgelenk
- 11: Spalt
- 12: Gleitbeschichtung
- 13: kongruente Ausgestaltung
- 20: Bremsbacke
- 21: Lager
- 22: Bremsbackensteg
- 23: Haltebereich
- 24: Bremsbelagträgerplatte
- 25: Ausnehmung
- 40: Lagerbolzen
- 41: Umfangsnut
- 42: Flachseite

## Patentansprüche

1. Verschleißring (1) für Trommelbremsen zur Anordnung zwischen einem Lager (21) einer Bremsbacke (20) und einem Lagerbolzen (40) eines Achskörpcrs, mit einer Innenseite (4) und einer Außenseite (5), wobei ein Ringabschnitt (6) des Verschleißrings (1) auf den Lagerbolzen (40), vorzugsweise auf eine im Lagerbolzen (40) vorgesehene Umfangsnut (41), aufspannbar ist,
**dadurch gekennzeichnet, dass**
- an dem Verschleißring (1) ein Greifarm (2) mit einem Greifabschnitt (3) vorgesehen ist und
- der Verschleißring (1) über den Greifabschnitt (3) an der Bremsbacke (20) lösbar, aber form- und/oder kraftschlüssig anbringbar ist.

2. Verschleißring (1) nach Anspruch 1, **dadurch gekennzeichnet, dass** die Innenseite (4) zumindest im Bereich der Kontaktfläche von Innenseite (4) und Lagerbolzen (40) formkomplementär zu dem Lagerbolzen (40) ausgebildet ist.

3. Verschleißring nach Anspruch 1 oder 2, **dadurch gekennzeichnet, dass** die Außenseite (5) zumindest im Bereich der Kontaktfläche von Außenseite (5) und Lager (21) formkomplementär zu dem Lager (21) ausgebildet ist.

4. Verschleißring nach Anspruch 1, **dadurch gekennzeichnet, dass** der Greifabschnitt (3) die Bremsbacke (20) an der dem Lager (21) gegenübcrlicgenden Seite der Bremsbacke (20) in einem Haltebereich (23) hintergreifend ausgebildet ist.

5. Verschleißring nach Anspruch 1, **dadurch gekennzeichnet, dass** der Greifarm (2) einstückig an dem Verschleißring (1) angeformt ist.

6. Verschleißring nach Anspruch 1, **dadurch gekennzeichnet, dass** der Greifarm (2) über mindestens ein Haltemittel (8) mit der Bremsbacke (20) verbunden ist und damit diese zumindest in Richtung des Ringabschnitts (6) haltend ausgebildet ist.

7. Verschleißring nach Anspruch 1, **dadurch gekennzeichnet, dass** der Greifarm (2) formkömplementär zu der Bremsbacke (20), einen Bremsbackensteg (22) der Bremsbacke (20) im Bereich des Greifabschnitts (3) hintergreifend ausgestaltet ist, vorzugsweise als L-förmiger Greifarm (2).

8. Verschleißring nach Anspruch 1, **dadurch gekennzeichnet, dass** der Greifarm (2) aus einem federnden Material, insbesondere Federstahl, besteht.

9. Verschleißring nach Anspruch 1, **dadurch gekennzeichnet, dass** der Verschleißring (1) Ausgleichsmittel zum Ausgleich einer Relativbewegung zwischen Lagerbolzen (40) und Bremsbacke (20) aufweist.

10. Verschleißring nach Anspruch 9, **dadurch gekennzeichnet, dass** die Ausgleichsmittel als Gelenk (10), vorzugsweise als Nietgelenk (10), in dem Greifarm (2), vorzugsweise außerhalb des Greifabschnitts (3), vorgesehen sind.

11. Verschleißring nach Anspruch 4 und 9, **dadurch gekennzeichnet, dass** die Ausgleichsmittel durch zu einer Relativbewegung des Greifabschnitts (3) kongruente Ausgestaltung (13) des Haltebereichs (23) und einer Gleitbeschichtung (14), vorzugsweise einer Kunststoffbeschichtung, an der Außenseite (5) Verschleißrings (1) vorgesehen sind.

12. Verschleißring nach Anspruch 9, **dadurch gekennzeichnet, dass** die Ausgleichsmittel als Gleitbeschichtung (12), vorzugsweise einer Kunststoffgleitbeschichtung, an der Innenseite (4) des Verschleißrings (1) vorgesehen sind.

13. Verschleißring nach Anspruch 1, **dadurch gekennzeichnet, dass** der Verschleißring aus einem T-förmigen Stanz-Biege-Material gebildet ist, wobei der obere Abschnitt der T-Form den Ringabschnitt (6) und der untere Abschnitt der T-Form den Greifarm (2) bildet und der Ringabschnitt (6) gegenüber dem Greifarm (2) angewinkelt ist, vorzugsweise um einen Winkel von 90°.

14. Verschleißring nach Anspruch 13, **dadurch gekennzeichnet, dass** ein abgerundeter Übergangsbereich (7) zwischen Greifarm (2) und Ringabschnitt vorgesehen ist.

15. Verschleißring nach Anspruch 14, **dadurch gekennzeichnet, dass** zwei Seiten (7a, 7b) des Übergangsbereichs (7) jeweils als sacklochartige oder tropfenförmige Ausnehmungen ausgebildet sind, deren eine Seite jeweils durch den Greifarm 2 gebildet ist.

16. Trommelbremse mit folgenden Merkmalen:
- einem am Achskörper eines Fahrzeugs angebrachten Lagerbolzen (40) mit einer tangentialen, sich axial erstreckenden Flachseite (42),
- zwei Bremsbacken (20) mit je zwei Bremsbackenstegen (22), wobei jeder Bremsbakensteg (22) ein dem Lagerbolzen (40) zugeordnetes Lager (21) mit halbschalenartiger Form aufweist,
- einem Verschleißring (1) nach einem der vorhergehenden Ansprüche,

17. Trommelbremse nach Anspruch 16, **dadurch gekennzeichnet, dass** der Verschleißring (1) an zwei der Flachseite (42) des Lagerbolzens (40) formkomplementär ausgestalteten Schenkeln (6a, 6b) mit Spiel (11) zur Flachseite (42) hin ausgebildet ist.
